# EUROPÄISCHE PATENTSCHRIFT

(11) **EP 1 421 771 B1**
(45) Veröffentlichungstag und Bekanntmachung des Hinweises auf die Patenterteilung: **10.05.2006**
(21) Anmeldenummer: 02797659.6
(22) Anmeldetag: 30.08.2002
(51) Int. Cl.: H04M 3/00

(54) **VERFAHREN ZUM HERSTELLEN EINER TELEKOMMUNIKATIONSVERBINDUNG ZWISCHEN ZWEI PERSONEN**
METHOD FOR ESTABLISHING A TELECOMMUNICATION CONNECTION BETWEEN TWO PEOPLE
PROCEDE POUR ETABLIR UNE LIAISON DE TELECOMMUNICATION ENTRE DEUX PERSONNES

(30) Priorität: 31.08.2001 DE 10142671; 20.11.2001 DE 10156866
(43) Veröffentlichungstag der Anmeldung: 26.05.2004
(73) Patentinhaber: Hargasser, Franz, 84539 Ampfing (DE); Maier, Thomas, 84549 Engelsberg (DE)
(72) Erfinder: Hargasser, Franz, 84539 Ampfing (DE); Maier, Thomas, 84549 Engelsberg (DE)
(74) Vertreter: Bardehle, Heinz
(86) Internationale Anmeldenummer: PCT/EP2002/009741
(87) Internationale Veröffentlichungsnummer: WO 2003/021925

(56) Entgegenhaltungen:
- WO-A-00/19344
- WO-A-00/56047
- WO-A-01/08391
- WO-A-02/01405
- WO-A-02/25986
- WO-A-02/28125

## Beschreibung

Der vorliegenden Erfindung liegt ein Verfahren zum Herstellen einer Telekommunikationsverbindung zwischen zwei Personen, die sich mit einem ihre Adresse enthaltenden Datensatz über ein Telekommunikationssystem bei einer diesem zugeordneten Datenverarbeitungseinrichtung melden, die mit einem Datensatzspeicher für die Speicherung derartiger Datensätze und einem Vergleicher versehen ist, der bei weitgehender Übereinstimmung mindestens zweier Datensätze ein Übereinstimmungssignal zur Herstellung einer Verbindung zwischen den beiden Personen abgibt.

Bei einem aus der DE 199 09 017 bekannten Verfahren arbeitet ein Telekommunikationssystem mit einer Datenverarbeitungseinrichtung zusammen, in der anbietende Datensätze gespeichert sind, mit denen Personen sich einschließlich ihrer Telekommunikationsadresse als kontaktbereit angeben. Um mit einer möglicherweise passenden Person aus dem Bereich der kontaktbereiten Personen in Verbindung zu treten, gibt die erste, kontaktsuchende Person einen anfragenden Datensatz in das Telekommunikationssystem ein, das daraufhin bei der Datenverarbeitungseinrichtung anfragt, ob in dieser ein im Wesentlichen zu dem anfragenden Datensatz passender anbietender Datensatz gespeichert ist. Der anfragende Datensatz wird dabei durch ein sich an Listen, Stichworten oder dergleichen orientierendem Normierungssystem erstellt. Stellt in der Datenverarbeitungseinrichtung ein Vergleicher einen passenden anbietenden Datensatz fest, so wird dieser der kontaktsuchenden Person mitgeteilt, dem daraufhin die Möglichkeit gegeben ist, mit der kontaktbereiten Person irgendwie in Verbindung zu treten, da deren Adresse in ihrem Datensatz enthalten ist, wobei es sich um die Telekommunikationsadresse oder die örtliche Adresse oder eine entsprechende Adresse handeln kann.

Ein ähnliches Verfahren ist in der DE 199 29 186 A1 offenbart. Dieses Verfahren beruht auf einem in besonderer Weise ausgestatteten Funktelefon, das sowohl bei der kontaktsuchenden als auch kontaktbereiten Person vorhanden sein muss. Jedes Funktelefon enthält eine vom Funktelefon unabhängige Sendeeinheit zum Senden von spezifischen Partnersuchsignalen, eine Empfangseinheit zum Empfangen dieses Partnersuchsignales und eine Auswerte- und Entscheidungsvorrichtung im Sinne eines Vergleichers zum Auswerten und Entscheiden, ob empfangene Partnersuchsignale, die Eigenschaften der kontaktsuchenden und einer eventuell kontaktbereiten Person enthalten, einem gewünschten spezifischen Signalmuster entsprechen. Im Falle der Feststellung einer weitgehenden Übereinstimmung zwischen dem abgesandten Partnersuchsignal und dem bzw. den in der Auswerte- und Entscheidungsvorrichtung gespeicherten Partnersuchsignal der kontaktwilligen Personen wird ein Antwortsignal oder mehrere Signale ausgelöst, durch das von dem Funktelefon der kontaktsuchenden Person aus ein Antwortsignal ergeht, das unter Benutzung der in dem Partnersuchsignal der kontaktwilligen Person bzw. Personen enthaltenen Adresse bei dieser eintrifft, womit zunächst eine Verbindung zwischen der kontaktsuchenden und kontaktbereiten Person hergestellt ist, wobei im Falle ähnlicher Partnersuchsignale kontaktbereiter Personen mehrere in die Verbindung einbezogen werden. Normalerweise ist dies unerwünscht.

Beide Verfahren setzen voraus, dass der kontaktsuchenden Person die Adresse einer kontaktbereiten Person über eine Datenverarbeitungseinrichtung mitgeteilt wird, um eine Verbindung herstellen zu können. Die genannten Verfahren lassen also eine Verbindungsherstellung nicht zu, wenn die Adresse der kontaktbereiten Person der kontaktsuchenden Person mitgeteilt wird.

Es ist weiterhin aus dem Dokument WO 00/19344 ein Verfahren zur Herstellung einer Telekommunikationsverbindung zwischen Personen, die sich bei einer Datenverarbeitungseinrichtung jeweils mit einem Datensatz gemeldet haben, bekannt, wobei der Datensatz einerseits eine Adresse des betreffenden Teilnehmers und andererseits eine Örtlichkeit enthält, bei der es sich um ein Gebäude, eine Straße, eine Stadt, einen Staat, usw., also jeweils weiträumige Bereiche, handelt.

Wenn dann die Datenverarbeitungseinrichtung Datensätze ermittelt, die jeweils die gleiche Örtlichkeit angeben, so wird zwischen den betreffenden Teilnehmern eine Telekommunikationsverbindung hergestellt. Wegen des weiten Bereichs der Örtlichkeit kann es sich dabei um eine größere Zahl von Übereinstimmungen handeln, was dann zu einer besonderen Telekommunikationsverbindung, nämlich einem Konferenzgespräch, führt.

Dieses System ist für die Herstellung einer Telekommunikationsverbindung zwischen einer kontaktsuchenden und einer sich in der Nähe befindlichen kontaktbereiten Person dann ungeeignet, wenn es sich von vornherein um die Aufgabe handelt, eine Telekommunikationsverbindung nur zwischen zwei Personen zu erstellen. Hierzu wird von dem eingangs geschilderten Verfahren ausgegangen.

Die vorstehend angegebene Aufgabe wird durch die kennzeichnenden Merkmale des Anspruche 1 gelöst.

Bei dem Verfahren muss zwar mindestens die kontaktbereite Person ihre Adresse der Datenverarbeitungseinrichtung zur Verfügung stellen, damit eine Verbindung zu ihr hergestellt werden kann, jedoch erfordert der Ablauf des Verfahrens nicht, dass dabei die Adressen der kontaktsuchenden und kontaktbereiten Person der jeweils anderen Person bekannt werden, da nach positiv durchgeführtem Vergleich die Verbindungsherstellung durch die Steuerung von der Datenverarbeitungseinrichtung her über das Telekommunikationssystem erfolgt, wobei keine der beiden Personen aktiv jeweils die andere Adresse eingeben muss. Das Verfahren arbeitet daher unter vollem Schutz der jeweiligen Adressen, so dass beide Personen so lange anonym bleiben, bis sie selbst der jeweils anderen Person ihre Adresse mitteilen.

Das Ausbleiben des Übereinstimmungssignals, wenn also ein zweiter weitgehend übereinstimmender Datensatz durch den Vergleicher nicht ermittelt worden ist, kann man dazu ausnutzen, um auch zu einem späteren Zeitpunkt eine Kontaktaufnahme zwischen dem Kontaktsuchenden und einem Kontaktbereiten zu ermöglichen. Dies geschieht dadurch, dass bei Ausbleiben des Übereinstimmungssignals der Datensatz der kontaktsuchenden Person in dem Datensatzspeicher vorübergehend für eine wahlweise einstellbare Zeit, z.B. zwei Tage, gespeichert wird. Wenn in dieser Zeit von einer kontaktsuchenden Person ein Datensatz der Datenverar beitungseinrichtung übermittelt und durch den Vergleicher Übereinstimmung festgestellt wird mit dem Ergebnis der Abgabe des Übereinstimmungssignals, dann ergibt sich das oben Erwähnte, im Telekommunikationssystem erzeugte Rufsignal zu der kontaktsuchenden Person, womit eine Telekommunikationsverbindung zwischen den beiden Funktelefonen beider Personen erstellt wird. Auf diese Weise wird erreicht, dass jedenfalls für eine Mehrzahl von Fällen der ursprünglich in den Datensatzspeicher eingegebene Datensatz der kontaktsuchenden Person für eine gewisse Zeit noch für eine Kontaktaufnahme zur Verfügung steht.

Um bei dem Verfahren zum Herstellen einer Telekommunikationsverbindung unter Benutzung von mindestens Zeitpunkt und Aufenthaltsort einer kontaktsuchenden Person enthaltenden Datensätzen die Verbindungsherstellung mit einer kontaktbereiten Person besonders schnell durchzuführen, wird ein Zwischenspeicher im Funktelefon mit Zeitpunkt und Aufenthaltsort gespeist und der so mit der Rufnummer des Funktelefons ergänzte Datensatz als Datenblock durch einen im Funktelefon vom Benutzer gegebenen Befehl, z.B. durch Knopfdruck, dem Telekommunikationssystem übermittelt, wobei der Aufenthaltsort der kontaktsuchenden Person durch ein im Funktelefon integriertes Standortermittlungssystem ermittelt wird. Wenn also z.B. durch Blickkontakt im Bereich eines Fußgängerverkehrs eine möglicherweise kontaktbereite Person gesehen wird, dann kann der Datenblock durch einen einfachen Befehl, z.B. durch Knopfdruck, ausgesandt werden, der dann dem Telekommunikationssystem übermittelt wird, wo über den Vergleicher festgestellt wird, ob ein zu dem Datenblock passender Datensatz einer kontaktbereiten Person im Datensatzspeicher gespeichert ist. Die Aktualisierung des Aufenthaltsorts kann dabei automatisiert werden, nämlich dadurch, dass ein Standortermittlungssystem die Daten des jeweiligen Standortes in den betreffenden Zwischenspeicher eingibt, wozu in bekannter Weise ein Standortermittlungssystem verwendet werden kann, das z.B. nach Art des GPS-Systems arbeitet.

Die Ermittlung des Aufenthaltsortes kann auch dadurch herbeigeführt werden, dass die jeweilige Funkstation, in die sich das Funktelefon einer kontaktbereiten Person eingewählt hat, als Aufenthaltsort festgehalten wird, was in den allermeisten Fällen unter Berücksichtigung der Genauigkeit des festgestellten Zeitpunktes ausreicht, um eine Übereinstimmung von Datenblock und Datensatz einer kontaktbereiten Person zu ermitteln. Diese einen weiteren Raum umfassende Angabe des Aufenthaltsortes kann durch Eingabe der Kennung der eingewählten Funkstation in den betreffenden Zwischenspeicher erfolgen.

Um dem Informationsgehalt eines Datensatzes durch weitere Angaben zu erhöhen, kann man dem Datensatz mindestens einer der beiden Personen ein Digitalsignal beifügen. Bei diesem Digitalsignal kann es sich z.B. um ein digitales Bild handeln. Es ist aber auch möglich, dass das Digitalsignal eine Visitenkarte mitumfasst.

Vorteilhaft gestaltet man das Herstellen einer Telekommunikationsverbindung so, dass das der kontaktbereiten Person zugeleitete Rufsignal eine Kennung enthält, die der kontaktbereiten Person anzeigt, dass das Rufsignal durch ein Übereinstimmungssignal ausgelöst ist. In diesem Fall kann die kontaktbereite Person unterscheiden, ob es sich um einen normalen Anruf oder einen solchen handelt, der zur Herbeiführung einer Kontaktaufnahme dienen soll. Am einfachsten gestaltet man die Kennung so, dass sie auf dem Display eines Funktelefons erscheint, womit der kontaktbereiten Person bei Entgegennahme des Rufsignals über ein Funktelefon auf dessen Display sofort angezeigt wird, dass es sich um die Herstellung eines persönlichen Kontaktes handelt.

Zweckmäßig gibt man dem Vergleicher einen begrenzten Zeitraum für die von ihm durchgeführte Ermittlung vor, was durch eine entsprechende Steuerung von der Datenverarbeitungseinrichtung her geschehen kann. Die Datenverarbeitungseinrichtung lässt dann die Abgabe von Übereinstimmungssignalen nur für den begrenzten Zeitraum zu, so dass sich in diesem Zeitraum gegebenenfalls mehrfach Übereinstimmungssignale ergeben, die dann im Sinne der vorstehend beschriebenen Auswahl ausnutzbar sind. Dabei geht man zweckmäßig so vor, dass bei Feststellung eines ersten Übereinstimmungssignals dieses den Ablauf des begrenzten Zeitraums auslöst, an dessen Ende dann gegebenenfalls die weiteren Übereinstimmungssignale vorliegen oder auch nur das erste, den Ablauf des Zeitraums anstoßende Übereinstimmungssignal. Wenn dann der begrenzte Zeitraum abgelaufen ist, dann erhält die sich bei der Datenverarbeitungseinrichtung meldende kontaktsuchende Person keine Telekommunikationsverbindungen mehr, da die Abgabe des Übereinstimmungssignals nur für den begrenzten Zeitraum im Zusammenhang mit der betreffenden kontaktsuchenden Person ermöglicht wird. Dabei wird das Anlaufen des begrenzten Zeitraumes durch jede Meldung einer Person, ob es sich also um eine kontaktsuchende oder eine kontaktbereite Person handelt, ausgelöst, so dass nur dann, wenn sich die von zwei Personen ausgelösten begrenzten Zeiträume zeitlich überlappen, in diesem Überlappungsbereich ein Auftreten des Übereinstimmungssignals zu einer Telekommunikationsverbindung zwischen den beiden Personen führen kann.

Zweckmäßigerweise wird die Bemessung des Zeitraumes so gestaltet, dass dieser von jeder der beiden Personen individuell für sich durch Ermittlung eines Zeitbefehls an die Datenverarbeitungseinrichtung festlegbar ist. Eine kontaktsuchende Person kann durch die Übermittlung des Zeitbefehls festlegen, für welchen Zeitraum sie bereit ist, auf Übereinstimmungssignale zu reagieren. Die Festlegung des Zeitraums lässt sich dabei in einfacher Weise durch eine entsprechende Betätigung der einzelnen Tasten des Funktelefons herbeiführen.

Das eingangs erläuterte Verfahren lässt sich auch so gestalten, dass die in dem Zeitraum auftretenden Übereinstimmungssignale mit den zugehörigen Datensätzen und Digitalsignalen in der Datenverarbeitungseinrichtung gespeichert und aus dieser zu einem späteren Zeitpunkt abrufbar bereit gehalten werden. Dies ist dann sinnvoll, wenn aus irgendeinem Grunde für eine der beiden Personen oder mehreren Personen die sofortige Erstellung einer Telekommunikationsverbindung nicht sinnvoll oder vernünftig möglich ist, jedoch zu einem späteren Zeitpunkt aber noch durchführbar sein soll. In diesem Falle kann eine kontaktbereite oder kontaktsuchende Person zu einem späteren Zeitpunkt die gespeicherten Daten abrufen. Bei diesen Daten kann es sich z.B. um Vergleichssignale handeln, die an einem belebten Platz um die Mittagszeit herum abgegeben worden sind, die jedoch erst in einer späteren Stunde daraufhin überprüft werden sollen, ob eine Kontaktaufnahme mit einer kontaktbereiten oder kontaktsuchenden Person sinnvoll ist.

Das oben erwähnte, durch weitere Angaben ergänzte Digitalsignal einer Person kann dazu benutzt werden, dieses der jeweils anderen Person vor Erstellen der Telekommunikationsverbindung zu übermitteln. Der anderen Person, bei der es sich z.B. um die kontaktbereite Person handeln kann, wird damit die Möglichkeit gegeben, sich eine Vorstellung von der kontaktsuchenden Person zu machen. Da diese Übermittlung des Digitalsignals zu beiden Personen erfolgen kann, besteht die Möglichkeit der Beurteilung der jeweils anderen Person auch von vorneherein bei der kontaktsuchenden Person. Dieses ergänzte Digitalsignal kann dann aufgrund seiner Übermittlung zu einer oder beiden Personen dazu benutzt werden, jeder der beiden Personen die Möglichkeit zu geben, die Erstellung der Telekommunikationsverbindung von einem Zustimmungsbefehl abhängig zu machen. Wenn also die eine oder andere Person nach Kenntnisnahme des durch die weiteren Angaben ergänzten Digitalsignals zu der Auffassung gelangt, dass die Erstellung einer Telekommunikationsverbindung aus irgendwelchen Gründen nicht sinnvoll ist, dann besteht für diese Person die Möglichkeit, den die Telekommunikationsverbindung ermöglichenden Zustimmungsbefehl zu unterlassen, so dass es dann zu einer Telekommunikationsverbindung überhaupt nicht kommt.

Das Vorsehen des Zustimmungsbefehls ist dann besonders sinnvoll, wenn sich aufgrund mehrerer Übereinstimmungssignale, also dem Melden mehrere kontaktbereiter Personen, eine Auswahl unter diesen kontaktbereiten Personen ermöglicht werden soll, die dann von der kontaktsuchenden Person dadurch durchgeführt wird, dass diese Person unter den ihr zur Kenntnis gebrachten ergänzten Digitalsignalen eine Auswahl trifft und nur im Zusammenhang mit der ausgewählten kontaktbereiten Person den Zustimmungsbefehl auslöst, der dem betreffenden Übereinstimmungssignal zugeordnet ist. Diese Auslösung des Zustimmungsbefehls ist natürlich auch dann möglich, wenn umgekehrt mehrere kontaktsuchende Personen eine oder mehrere durch die betreffenden Übereinstimmungssignale ermittelte kontaktbereite Personen festgestellt haben, so dass die durch den Zustimmungsbefehl ermöglichte Auswahl unter mehreren Personen ermöglicht wird.

Es sei noch darauf hingewiesen, dass die Auswahl einer kontaktbereiten Person nicht notwendigerweise unmittelbar nach Übermittlung des Datensatzes einer kontaktsuchenden Person erfolgen muss. Vielmehr ist es auch möglich, die Übermittlung des Datensatzes einer kontaktsuchenden Person und der Feststellung eines passenden Datensatzes einer kontaktbereiten Personen zu einem beliebigen späteren Zeitpunkt durchzuführen, der nach Abgabe des Übereinstimmungssignals liegt, der z.B. zu einer Tageszeit ausgelöst wird, aber erst in einer Abendstunde durch Abgabe des Zustimmungsbefehls zu Erstellung einer Telekommunikationsverbindung führt, so dass die Auswahl einer kontaktsuchenden Person durch eine kontaktbereite Person zu einem beliebigen späteren Zeitpunkt durchgeführt werden kann.

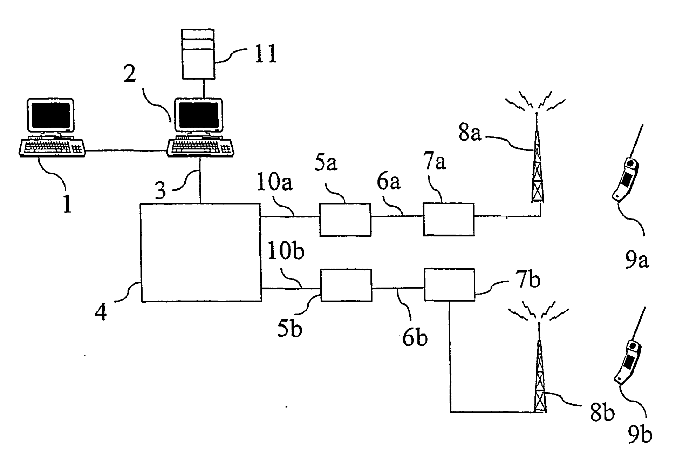

In der Figur ist ein Ausführungsbeispiel für die Durchführung der vorstehend herausgestellten Verfahren nach Art eines Blockschaltbildes wiedergegeben.

Gemäß der Figur bedienen sich die eine Telekommunikationsverbindung wünschenden zwei Personen eines Funktelefons 9a und 9b. Dabei wird über die Verbindungsleitungen 10a und 10b eine Verbindung zu bzw. von einem üblichen Telekommunikationssystem 4 hergestellt, in dem die für die Zusammenschaltung zweier Teilnehmer erforderlichen bekannten Schaltmittel vorhanden sind. Die Verbindungsherstellung erfolgt von den Funktelefonen 9a und 9b zu den Vermittlungsleitungen 10a und 10b über die Funkstationen 8a und 8b, sowie die zugehörigen Basisstationen 7a und 7b, die über die Zuleitungen 6a und 6b mit Teilnehmerschaltungen 5a und 5b zusammenschaltbar sind.

Wenn nun über die Funktelefone 9a und 9b jeweils eine Verbindung zu dem Telekommunikationssystem 4 in üblicher Weise hergestellt ist und dann dem Telekommunikationssystem von beiden Funktelefonen 9a und 9b jeweils ein Datensatz übermittelt wird, der mindestens Zeitpunkt und Aufenthaltsort einer kontaktsuchenden Person und einer kontaktbereiten Person sowie deren Rufnummer enthält, so werden diese Datensätze der Datenverarbeitungseinrichtung 2 über die Datenleitung 3 übermittelt und in dieser in einem Datenspeicher 11 gespeichert. Bei dem Datenspeicher 11 fragt nun der Vergleicher 1 über die Datenverarbeitungseinrichtung 2 an, ob zueinander passende Datensätze im Sinne mindestens einer ausreichenden Ähnlichkeit vorhanden sind. Zutreffendenfalls löst der Vergleicher 1 ein Übereinstimmungssignal aus, das über die Datenverarbeitungseinrichtung 2 dem Telekommunikationssystem 4 mitgeteilt wird, das mit den in den ermittelten Datensätzen enthaltenen Adressen jeweils eine Verbindung zu den zugehörigen Funktelefonen 9a und 9b herstellt, die damit, ohne dass ihre Adressen dem jeweils anderen Teilnehmer bekannt werden, über das Telekommunikationssystem 4 miteinander verbunden sind. Die beiden Teilnehmer, bei denen es sich bei der einen um eine kontaktbereite und bei der anderen um eine kontaktsuchende Person handelt, können nunmehr miteinander telefonieren und haben damit den gewünschten telefonischen Kontakt (mit allen Konsequenzen) hergestellt.

Die in der Figur dargestellte Anordnung ist auch dazu geeignet, das Verfahren durchzuführen, bei dem eine kontaktbereite Person ihr Autokennzeichnen als Datensatz über das Telekommunikationssystem 4 der Datenverarbeitungseinrichtung 2 gemeldet hat, so dass kontaktsuchende Personen über das Autokennzeichen mit der kontaktbereiten Person in Verbindung treten können. Das Verfahren benutzt wie das vorstehend beschriebene Verfahren die Funktelefone 9a und 9b, über die, wie oben beschrieben, jeweils eine Verbindung über die Verbindungsleitung 10a und 10b zu dem Telekommunikationssystem 4 hergestellt wird. Im Speicher 11 der Datenverarbeitungseinrichtung 2 sind alle Autokennzeichen von kontaktbereiten Personen gespeichert. Eine kontaktsuchende Person, die mit dem Besitzer eines ihm bekannten Autokennzeichens in Verbindung treten möchte, gibt dann das ihm bekannte Autokennzeichen über das Telekommunikationssystem 4 in die Datenverarbeitungseinrichtung 2 ein, woraufhin mittels des Vergleichers festgestellt wird, ob das so eingegebene Autokennzeichen mit einem im Speicher 11 enthaltenen Autokennzeichen übereinstimmt. Zutreffendenfalls wird dann, wie oben beschrieben, das Übereinstimmungssignal ausgelöst. Da dem das Autokennzeichen enthaltenen Datensatz die Rufnummer des Besitzers des Autos mit dem betreffenden Autokennzeichen angefügt ist, kann das Telekommunikationssystem 4 aufgrund der bestehenden Verbindung von dem kontaktsuchenden Teilnehmer her eine Verbindung zu dem Besitzer des ermittelten übereinstimmenden Autokennzeichens herbeiführen, womit also eine Telefonverbindung von den beiden Funktelefonen 9a und 9b über das Telekommunikationssystem 4 hergestellt ist, ohne dass dabei irgendeine Telefonadresse nach außen in Erscheinung tritt. Die somit zusammengeschalteten Teilnehmer sind damit in Kontakt, was der Sinn der Abwicklung dieses Verfahrens war.

Das vorstehend zuletzt beschriebene Verfahren mit der Benutzung des Autokennzeichens kann natürlich auch unter Verwendung von konventionellen Telefonapparaten durchgeführt werden. In diesem Falle sind die Teilnehmerschaltungen 5a und 5b anstelle mit Funktelefonen 9a und 9b direkt mit konventionellen Telefonapparaten verbunden.

## Patentansprüche

1. Verfahren zum Herstellen einer Telekommunikationsverbindung zwischen zwei Personen, die sich mit einem ihre Adresse enthaltenden Datensatz über ein Telekommunikationssystem (4) bei einer diesem zugeordneten Datenverarbeitungseinrichtung (2) melden, die mit einem Datensatzspeicher (11) für die Speicherung derartiger Datensätze und einem Vergleicher (1) versehen ist, der bei weitgehender Übereinstimmung mindestens zweier Datensätze ein Übereinstimmungssignal *zur Herstellung einer Verbindung zwischen den beiden Personen* abgibt, **dadurch gekennzeichnet, dass** der von einem Funktelefon (9a, 9b) übermittelte Datensatz mindestens Zeitpunkt und durch ein Standortermittlungssystem ermittelter Aufenthaltsort einer sich meldenden, kontaktsuchenden Person sowie deren Rufnummer enthält, zu dem ein passender, ebenfalls Zeitpunkt und Aufenthaltsort enthaltender Datensatz einer sich ebenfalls meldenden, kontaktbereiten Person im Vergleicher (1) ermittelt wird, wobei jede Meldung des Datensatzes mit Zeitpunkt und Aufenthaltsort der kontaktsuchenden Person das Anlaufen eines begrenzten Zeitraums in der Datenverarbeitungseinrichtung (2) für die Ermittlung des Übereinstimmungssignals und dessen Abgabe bei Überlappung der beiden Zeiträume auslöst, und dass das Übereinstimmungssignal im Telekommunikationssystem (4) ein Rufsignal zu der kontaktbereiten Person zu deren Funktelefon erzeugt und damit eine Telekommunikationsverbindung zwischen den beiden Funktelefonen (9a, 9b) beider Personen erstellt.

2. Verfahren nach Anspruch 1, **dadurch gekennzeichnet, dass** bei Ausbleiben des Übereinstimmungssignals der Datensatz der kontaktsuchenden Person in dem Datensatzspeicher (2) vorübergehend für eine wahlweise einstellbare Zeit gespeichert wird.

3. Verfahren nach Anspruch 1 oder 2, **dadurch gekennzeichnet, dass** im Funktelefon ein Zwischenspeicher mit Zeitpunkt und Aufenthaltsort gespeist wird und der so mit der Rufnummer des Funktelefons ergänzte Datensatz als Datenblock durch einen im Funktelefon vom Benutzer gegebenen Befehl, z.B. durch Knopfdruck, dem Telekommunikationssystem (4) übermittelt wird, wobei der Aufenthaltsort der kontaktnehmenden Person durch ein im Funktelefon integriertes Standortermittlungssystem ermittelt wird.

4. Verfahren nach Anspruch 1 oder 2, **dadurch gekennzeichnet, dass** im Funktelefon in einem Zwischenspeicher ein Datensatz mit Zeitpunkt und Rufnummer des Funktelefons als Datenblock durch einen dem Funktelefon vom Benutzer gegebenen Befehl, z.B. durch Knopfdruck, dem Telekommunikationssystem (4) übermittelt wird, wobei der Aufenthaltsort der kontaktnehmenden Person durch die Kennung der eingewählten Funkstation angegeben und dem Datenblock hinzugefügt wird.

5. Verfahren nach einem der Ansprüche 1 bis 4, **dadurch gekennzeichnet, dass** dem Datensatz mindestens einer der beiden Personen ein Digitalsignal beigefügt wird.

6. Verfahren nach Anspruch 5, **dadurch gekennzeichnet, dass** das Digitalsignal ein Bild enthält.

7. Verfahren nach Anspruch 5, **dadurch gekennzeichnet, dass** das Digitalsignal eine Visitenkarte umfasst.

8. Verfahren nach einem der Ansprüche 1 bis 7, **dadurch gekennzeichnet, dass** das der kontaktbereiten Person zugeleitete Rufsignal eine Kennung enthält, die der kontaktbereiten Person anzeigt, dass das Rufsignal durch ein Übereinstimmungssignal ausgelöst ist.

9. Verfahren nach Anspruch 8, **dadurch gekennzeichnet, dass** die Kennung auf die Display eines Funktelefons erscheint.

10. Verfahren nach einem der Ansprüche 1-9, **dadurch gekennzeichnet, dass** die Datenverarbeitungseinrichtung (2) dem Vergleicher (1) einen begrenzten Zeitraum für die vom Vergleicher (1) durchgeführte Ermittlung vorgibt.

11. Verfahren nach Anspruch 10, **dadurch gekennzeichnet, dass** der Zeitraum von jeder der beiden Personen individuell für sich durch Übermittlung eines Zeitbefehls an die Datenverarbeitungseinrichtung (2) festlegbar ist.

12. Verfahren nach Anspruch 10 oder 11, **dadurch gekennzeichnet, dass** die in dem Zeitraum auftretenden Übereinstimmungssignale mit den zugehörigen Datensätzen und Digitalsignalen in der Datenverarbeitungseinrichtung (2) gespeichert und aus dieser zu einem späteren Zeitpunkt abrufbar bereitgehalten werden.

13. Verfahren nach einem der Ansprüche 10 bis 12, bei dem dem Datensatz mindestens einer der beiden Personen ein Digitalsignal beigefügt wird, **dadurch gekennzeichnet, dass** das Digitalsignal einer Person der jeweils anderen Person vor Erstellen der Telekommunikationsverbindung übermittelt wird.

14. Verfahren nach einem der Ansprüche 10 bis 13, **dadurch gekennzeichnet, dass** die Erstellung der Telekommunikationsverbindung von einem Zustimmungsbefehl mindestens einer der beiden Personen abhängig gemacht wird.

## Claims

1. Method of establishing a telecommunication link between two people registering by means of a record containing their address via a telecommunication system (4) with an associated data processing unit (2) provided with a record store (11) for storing records of this kind and a comparator (1) which emits a matching signal in the event of a substantial match between at least two records in order to establish a link between the two people, **characterised in that** the record transmitted from a mobile telephone (9a, 9b) contains at least the time and location of a registering person wishing to make contact, determined by means of a positioning system, as well as their call number and a matching record of a likewise registering person ready to make contact also containing the time and location is determined in the comparator (1), each registration of the record with the time and location of the person wishing to make contact triggering the start of a limited period in the data processing unit (2) for determining the matching signal and emitting it when the two periods overlap, and that the matching signal generates a call signal in the telecommunication system (4) on the mobile telephone of the person ready to make contact, thereby establishing a telecommunication link between the two mobile telephones (9a, 9b) of the two people.

2. Method according to claim 1, **characterised in that**, in the absence of the matching signal, the record of the person wishing to make contact is stored temporarily in the record store (2) for a time that can be varied as required.

3. Method according to claim 1 or claim 2, **characterised in that** the time and location are supplied to a buffer store in the mobile telephone and the record added to in this manner by the call number of the mobile telephone is transmitted to the telecommunication system (4) as a data block by an instruction input into the mobile telephone by the user, e.g. by pressing a key, the location of the person making contact being determined by a positioning system integrated into the mobile telephone.

4. Method according to claim 1 or claim 2, **characterised in that** a record with the time and call number of the mobile telephone in a buffer store in the mobile telephone is transmitted to the telecommunication system (4) as a data block by an instruction input into the mobile telephone by the user, e.g. by pressing a key, the location of the person making contact being indicated by the identifier of the radio station dialled and being added to the data block.

5. Method according to one of claims 1 to 4, **characterised in that** a digital signal is added to the record of at least one of the two people.

6. Method according to claim 5, **characterised in that** the digital signal contains an image.

7. Method according to claim 5, **characterised in that** the digital signal includes a visiting card.

8. Method according to one of claims 1 to 7, **characterised in that** the call signal delivered to the person ready to make contact contains an identifier indicating to the person ready to make contact that the call signal has been triggered by a matching signal.

9. Method according to claim 8, **characterised in that** the identifier appears on the display of a mobile telephone.

10. Method according to one of claims 1-9, **characterised in that** the data processing unit (2) prescribes a limited period for the determination carried out by the comparator (1).

11. Method according to claim 10, **characterised in that** the period can be fixed by each of the two people individually by transmitting a time instruction to the data processing unit (2).

12. Method according to claim 10 or claim 11, **characterised in that** the matching signals occurring in the period and the associated records and digital signals are stored in the data processing unit (2) and are kept ready to be retrieved therefrom at a later point in time.

13. Method according to one of claims 10 to 12, in which a digital signal is added to the record of at least one of the two people, **characterised in that** the digital signal of one person is transmitted to the respective other person before the telecommunication link is established.

14. Method according to one of claims 10 to 13, **characterised in that** the establishment of the telecommunication link is made dependent upon a consent instruction from at least one of the two people.

## Revendications

1. Procédé pour établir une liaison de télécommunication entre deux personnes qui, au moyen d'un ensemble de données contenant leur adresse, se connectent, par l'intermédiaire d'un système de télécommunication (4), à un dispositif de traitement de données (2) associé à ce dernier et muni d'une mémoire d'ensembles de données (11) pour mémoriser des ensembles de données de ce type et d'un comparateur (1) qui, en cas de large concordance entre au moins deux ensembles de données, délivre un signal de concordance pour établir une liaison entre les deux personnes, **caractérisé en ce que** l'ensemble de données transmis par un radiotéléphone (9a, 9b) contient au moins la date et le lieu de séjour, détecté par un système de localisation, d'une personne connectée en quête de contact ainsi que son numéro d'appel et, en fonction de celui-ci, un ensemble de données correspondant, contenant également une date et un lieu de séjour, d'une personne en attente de contact, elle aussi connectée, est détecté dans le comparateur (1), chaque réception de l'ensemble de données avec date et lieu de séjour de la personne en quête de contact déclenchant dans le dispositif de traitement de données (2) le décompte d'un laps de temps limité pour détecter le signal de concordance et pour le délivrer en cas de coïncidence temporelle entre les deux laps de temps, et **en ce que** le signal de concordance génère, dans le système de télécommunication (4), un signal d'appel de la personne en attente de contact sur son radiotéléphone et établit ainsi une liaison de télécommunication entre les deux radiotéléphones (9a, 9b).

2. Procédé selon la revendication 1, **caractérisé en ce que**, en cas d'absence de signal de concordance, l'ensemble de données de la personne en quête de contact est mémorisé temporairement dans la mémoire d'ensembles de données (2) pendant une durée réglable à volonté.

3. Procédé selon la revendication 1 ou 2, **caractérisé en ce que**, dans le radiotéléphone, une mémoire intermédiaire enregistre la date et le lieu de séjour, et l'ensemble de données ainsi complété avec le numéro d'appel du radiotéléphone est transmis au système de télécommunication (4) sous forme de bloc de données sur une instruction donnée par l'utilisateur à travers le radiotéléphone, par exemple en pressant une touche, le lieu de séjour de la personne contactante étant détecté par l'intermédiaire d'un système de localisation intégré au radiotéléphone.

4. Procédé selon la revendication 1 ou 2, **caractérisé en ce que**, dans le radiotéléphone, dans une mémoire intermédiaire, un ensemble de données avec date et numéro d'appel du radiotéléphone est transmis au système de télécommunication (4) sous forme de bloc de données sur une instruction donnée par l'utilisateur à travers le radiotéléphone, par exemple en pressant une touche, le lieu de séjour de la personne contactante étant fourni par le signe distinctif de la station radio sélectionnée et ajouté au bloc de données.

5. Procédé selon une des revendications 1 à 4, **caractérisé en ce qu'**à l'ensemble de données d'au moins une des deux personnes est ajouté un signal numérique.

6. Procédé selon la revendication 5, **caractérisé en ce que** le signal numérique contient une image.

7. Procédé selon la revendication 5, **caractérisé en ce que** le signal numérique renferme une carte de visite.

8. Procédé selon une des revendications 1 à 7, **caractérisé en ce que** le signal d'appel envoyé à la personne en attente de contact contient un signe distinctif qui signale à la personne en attente de contact que le signal d'appel est déclenché par un signal de concordance.

9. Procédé selon la revendication 8, **caractérisé en ce que** le signe distinctif apparaît sur l'afficheur d'un radiotéléphone.

10. Procédé selon une des revendications 1-9, **caractérisé en ce que** le dispositif de traitement de données (2) alloue au comparateur (1) un laps de temps limité pour la détection réalisée par le comparateur (1).

11. Procédé selon la revendication 10, **caractérisé en ce que** le laps de temps peut être fixé individuellement par chacune des deux personnes en transmettant une instruction de temps au dispositif de traitement de données (2).

12. Procédé selon la revendication 10 ou 11, **caractérisé en ce que** les signaux de concordance émis durant le laps de temps sont mémorisés avec les ensembles de données et les signaux numériques associés dans le dispositif de traitement de données (2) et tenus à disposition pour pouvoir être appelés à une date ultérieure à partir de celui-ci.

13. Procédé selon une des revendications 10 à 12, dans lequel un signal numérique est ajouté à l'ensemble de données d'au moins une des deux personnes, **caractérisé en ce que** le signal numérique d'une personne est transmis à l'autre personne avant établissement de la liaison de télécommunication.

14. Procédé selon une des revendications 10 à 13, **caractérisé en ce que** l'établissement de la liaison de télécommunication est subordonné à l'instruction de consentement d'au moins une des deux personnes.
